Europäisches Patentamt

European Patent Office

Office européen des brevets

(11) Publication number: **0 351 046 B1**

# EUROPEAN PATENT SPECIFICATION

(45) Date of publication of patent specification: **06.09.95**

(51) Int. Cl.[6]: **D01F 6/34**, D01F 6/14, D01F 11/06, D01F 6/18

(21) Application number: **89305520.2**

(22) Date of filing: **01.06.89**

The file contains technical information submitted after the application was filed and not included in this specification

(54) **Polyvinyl alcohol multifilament yarn and process for producing the same.**

(30) Priority: **02.06.88 JP 136285/88**
**03.08.88 JP 194243/88**

(43) Date of publication of application:
**17.01.90 Bulletin 90/03**

(45) Publication of the grant of the patent:
**06.09.95 Bulletin 95/36**

(84) Designated Contracting States:
**BE DE FR GB IT**

(56) References cited:
**EP-A- 0 212 757**
**FR-A- 852 613**
**FR-A- 2 072 392**

(73) Proprietor: **TORAY INDUSTRIES, INC.**
**2-1, Nihonbashi-Muromachi 2-chome**
**Chuo-ku**
**Tokyo 103 (JP)**

(72) Inventor: **Taniguchi, Atsushi**
**9-21, 1451-1, Oaza Tsutsui**
**Masakicho**
**Iyo-gun**
**Ehime-ken 791-31 (JP)**
Inventor: **Suzuki, Mitsuo**
**1392, Kawai**
**Tobecho**
**Iyo-gun**
**Ehime-ken, 791-12 (JP)**
Inventor: **Mizuno, Masaharu**
**307, Surpas Doida-higashi, 544**
**Doidacho**
**Matsuyama-shi**
**Ehime-ken 790 (JP)**

(74) Representative: **Sturt, Clifford Mark et al**
**J. MILLER & CO.**
**34 Bedford Row**
**Holborn**
**London WC1R 4JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 351 046 B1

## Description

The present invention relates to a polyvinyl alcohol multifilament yarn (abbreviated as PVA yarn hereinafter) and a process for producing the same. More particularly, it relates to a PVA yarn which has high tensile strength together with good hot water resistance, and to a process for producing the same.

The most required characteristics of the yarn using in the industrial field application such as tire cords, ropes, stitching threads, seat belts and fishing nets, is high tensile strength. In order to get a high tensile strength PVA yarn which is usable in the industrial field, US-A-4 603 083 and US-A-4 698 194 have been already proposed. As these PVA yarns proposed therein have a degree of polymerization of at least 1500, a tensile strength of at least 12 g/d and an initial modulus of at least 280 g/d, they are sufficient in mechanical properties, and usable in the industrial field application.

However, these PVA yarns are insufficient of a hot water resistance to be melt down when they are used at high temperature in presence of water. So they are apparently better in a tensile strength than conventional PVA yarns, but not entirely sufficient in the field of tire cord application which is required a stable reinforcing effect for a long period.

In order to improve a hot water resistance of a PVA yarn, there has been already proposed some methods. For example, according to Japanese Patent Publication No. 46-11457, it is tried to improve the hot water resistance of a PVA yarn by mixing polyvinyl alcohol with boron compound to make the crosslinked structures between hydroxyl groups of polyvinyl alcohol and boron. However, the hot water resistance of the PVA yarn according to the above method was insufficient in the tire cord application which is used in very severe conditions.

It is an object of this invention to provide a PVA yarn having a high level of a hot water resistance as well as a high tensile strength.

It is another object of this invention to provide a PVA yarn having a high hot water resistance and tensile strength, particularly a good resistance to fatigue when it is used in tire cord.

It is still another object of this invention to provide a process for industrially producing such a PVA yarn having superior physical properties such as a high tensile strength and hot water resistance.

According to the invention, there is provided a multifilament yarn of polyvinyl alcohol having a degree of polymerisation of at least 1500, a tensile strength of at least 10 g/d, which is obtainable from polyvinyl alcohol having a cross-linked structure in the hydroxyl groups thereof, characterised in that the yarn has an index of hot water resistance of at least 50, and a peak temperature difference in melting point $\Delta Tm$ of at least 20° C.

Preferably this PVA yarn has a saponification value of at least 99 mol %.

The PVA yarn provided with the characteristics as mentioned above is suitably produced by a process as described in detail hereinafter.

There are two different methods to produce the PVA yarn of the present invention. The first one is to produce the PVA yarn by blending polyvinyl alcohol with special chemical compounds. Another one is to apply cross-linking agent to an intermediate drawn PVA yarn which is drawn at a low draw ratio, regardless of blending polyvinyl alcohol with the above mentioned compounds.

According to the invention, there is provided a first process for producing a polyvinyl alcohol multifilament yarn which comprises the steps of spinning a solution of polyvinyl alcohol having a degree of polymerisation of at least 1500 and drawing the resultant spun filament yarn at a total draw ratio of at least 12 times in a multi-step drawing process, characterised in that the polyvinyl alcohol is blended with an acrylic acid polymeric compound in a mixture ratio of acrylic acid polymeric compound to polyvinyl alcohol of from 0.1 to 40% by weight, the solution having a pH of from 5 to 11, by a spinning process selected from a wet spinning, a dry-jet wet spinning and a gel spinning.

In the former production process, polyvinyl alcohol having a degree of polymerisation of at least 1500 is blended with acrylic acid polymeric compounds, a solution of the polyvinyl alcohol in organic solvent, a concentration of it preferably being in the range of 2 to 30 wt %, more preferably 5 to 25 wt %, is spun and the resultant filament yarn is drawn at a total draw ratio of at least 12 times.

Since, as a high degree of polymerisation gives a high tensile strength of the yarn, polyvinyl alcohol having a degree of polymerisation of at least 1500, preferably at least 2500, more preferably at least 3500, is used in the present invention. The saponification value of the polyvinyl alcohol is preferably at least 99 mol %. By using this kind of polyvinyl alcohol having a high degree of polymerisation and high saponification value, the resulting yarn is able to have a tensile strength of at least 10 g/d, more preferably at least 14 g/d. And the high saponification value of at least 99 mol % gives the good water resistance together with a high tensile strength. Acrylic acid polymeric compound which is blended to polyvinyl alcohol is preferably selected from the group of acrylic acid, methacrylic acid (alpha-methyl acrylic acid), ethacrylic

2

acid (alpha-ethyl acrylic acid), and the polymer and oligomer of alkaline metal salts thereof. In so far as the solubility in a solvent is not largely spoiled, those polymers and oligomers in the main chains of which small amounts of olefinic monomers such as ethylene, propylene, styrene, itaconic acid and so on are copolymerized can be used. Moreover, so-called ionomers can be used, too.

There is no restriction for the degree of polymerization of the acrylic acid polymeric compound, but it is preferable in the range of 200 to 100,000, more preferably in the range of 200 to 50,000. When the degree of polymerization is too high, the dissolving property is reduced and sometimes it is difficult to handle.

A mixture ratio of the acrylic acid polymeric compound to the polyvinyl alcohol is controlled in the range of 0.1 to 40 wt% in the total polymer, preferably in the range of 0.1 to 20 wt%. If the mixture ratio is less than 0.1 wt%, it is difficult to get a sufficient hot water resistance; and if it is more than 40 wt%, sometimes it gives low tenacity.

Regarding a hot water resistance of the PVA yarn in this invention, it shows an index of hot water resistance (defined later) of at least 50, more preferably at least 60.

Regarding a spinning method of the above mentioned polymer solution, any of a wet spinning, a dry-jet wet spinning and a gel spinning is able to be adopted, specifically the dry-jet wet spinning or gel spinning is preferable. In order to get PVA yarns in the present invention whose tensile strength is 10 g/d or more, it is required that a total draw ratio is 12 times or more in a drawing process. To obtain yarns having a structure being capable of accepting such a high draw ratio, the dry-jet wet spinning and gel spinning are preferable. Namely, it is possible to obtain undrawn yarns having a dense structure and to draw them by a high draw ratio in the successive drawing process by spinning such PVA polymer of high degree of polymerization by means of the dry-jet wet spinning or gel spinning process. Consequently, it is possible to produce a high strength PVA yarn whose molecular orientation is very high and also crystallinity is high.

Now we describe a dry-jet wet spinning and gel spinning process which are used in the present invention.

The dry-jet wet spinning process is to extrude the polymer solution from a spinneret through a layer of air or inert gas such as nitrogen, and subsequently introduce to coagulate the spun filament yarns into a coagulating bath. In the present invention, the distance between the face of the spinneret and the liquid level of the coagulating bath is suitably 2 to 200 mm, preferably 3 to 20 mm. The solvent for the polymer solution suitably includes organic solvents such as dimethylsulfoxide (abbreviated as DMSO hereinafter), ethylene glycol, glycerin; and aqueous solution of inorganic salts such as zinc chloride, sodium thiocyanate, calcium chloride, aluminium chloride, boric acid; and mixture thereof. Preferable among them are DMSO and DMSO aqueous solution. A suitable coagulating agent for the coagulating bath includes alcohol such as methanol, ethanol, butanol; and acetone, benzene, toluene; and mixture of the above mentioned agent and DMSO, ethylene glycol, glycerin; and aqueous solutions of saturated inorganic salts.

The gel spinning process used in the present invention is to extrude the polymer solution into a cooling bath which has no miscibility with the spinning dope, through a spinneret which is set 2 to 200 mm, preferably 3 to 20 mm apart from the level of the cooling bath, and cool the spun filament yarn with keeping a concentration of the polymer practically to form gel. For solvents for the polymer solution, are suitable those which make the gel formation by means of cooling of the polymer solution. For example, there are listed polyalcohol such as glycerin, ethylene glycol, propylene glycol, di-ethylene glycol, tri-ethylene glycol, tetra-ethylene glycol and tri-methyl propane; and the non-volatile solvents such as benzene sulfoamide and caprolactum. Among them, glycerin and ethylene glycol are preferable.

And for the cooling bath, suitable are those which have no miscibility with the above described spinning dope and are non-solvents for PVA polymer. For example, there are listed decarin, tri-chlorethylene, tetra-chlorethylene, paraffine oil.

In every spinning process, stability of the polymer solution is subjected by the pH of the solution. So it is needed to control the pH of the solution in the range of 5 to 11. If the pH is less than 5, ester exchange reaction proceeds between hydroxyl groups of polyvinyl alcohol and carboxylic acid groups of acrylic acid polymeric compound, and consequently the spinnability becomes poor with increase in the viscocity of the polymer solution. And if the pH is more than 11, the mechanical properties becomes lower because of the main chain scission of the polyvinyl alcohol.

After the coagulation or gelation, the spun yarn is washed by extracting agent such as methanol and acetone, in order to remove the solvent, and subsequently the yarns are introduced to a multi-step drawing process. After the above washing step it is better to drawn the spun yarn at a draw ratio of 2 to 10 times, preferably 3 to 6 times in a methanol bath, and then introduce the yarn to a drying process. And it is still preferable to apply further drawing at a total draw ratio of at least 12 times in heating zone such as hot tube, hot roller, heating plate or fluidised bed at 200 to 260 ° C, in the heating air or nitrogen atmosphere, or in the heating liquid of 200 to 260 ° C.

According to the invention, there is provided a second process for producing a polyvinyl alcohol multifilament yarn, which comprises the steps of spinning a solution of polyvinyl alcohol having a degree of polymerisation of at least 1500 by a spinning process and drawing the resultant spun filament yarn at a total draw ratio of at least 12 times by a multi-step drawing process, characterised in that the spinning process is selected from a wet spinning, a dry-jet wet spinning and a gel spinning, and the intermediate drawn filament yarn is treated with cross-linking agent selected from the group of hydroperoxide, di-alkylperoxide, peroxyketal, peroxyester, isocyanate compound, blocked isocyanate compound, urethane compound and epoxy compound, or mixtures thereof during said multi-step drawing process, and the spun filament yarn is drawn at least 3.0 times prior to being treated with the cross-linking agent.

According to this second process, there is no limitation to use the acrylic acid polymeric compound which is blended with polyvinyl alcohol in the first method. The drawing process according to the second method, succeeding after the spinning process, is a multi-step process, in which a cross-linking agent is added to an intermediate drawn yarn which is preferably drawn at a low draw ratio and thereafter further drawing is applied under tension at high temperature until a total draw ratio becomes at least 12 times. In this process, it is required to draw the spun yarn at least 3.0 times, preferably at least 3.5 to 7.0 times prior to the application of the cross-linking agent. If the draw ratio is less than 3.0 times, the cross-linking agent penetrates into the yarn, consequently drawability and mechanical properties such as a tensile strength become lower because of the excess of the cross-linked structures.

Cross-linking agent is selected from the group of peroxide compounds such as hydroperoxide, di-alkylperoxide, peroxyketal and peroxyester; isocyanate compound, blocked isocyanate compound, urethane compound and epoxy compound. Also, a mixture of one or more compounds thereof is applicable. The procedures to give the cross-linking agent to the yarns are; to dip the yarn into the inorganic solvent solution or aqueous solution of said agent; to contact the yarn to the roller surface which makes coating membrane of said solution; or to spray the solution onto the yarn.

According to each method of said processes, it is possible to produce the PVA yarn having a tensile strength of at least 10 g/d, more preferably at least 14 g/d, and mechanical properties of the yarn are sufficient for industrial application. And the hydroxyl groups of polyvinyl alcohol composing the PVA yarn are blocked, namely, in the former case, to make the crosslinked structure with carboxyl groups of the acrylic acid polymeric compound, and in the latter case, to make it with added cross-linking agent. Moreover, the PVA yarn has a characteristic where a peak temperature difference in melting point ΔTm measured by means of the below described DSC method becomes at least 20° C. These characteristics where crosslinked structures exist in the hydroxyl groups in the PVA polymer and the peak temperature difference in melting point ΔTm measured by means of the DSC method is at least 20° C are related with the hot water resistance of the PVA yarn and bring an index of hot water resistance to at least 50.

The PVA yarn having an index of hot water resistance of at least 50 has an excellent hot water resistance so that it is not melt down even in exposuring in saturated steam of 120° C and after exposuring in 120° C steam for 10 min., a strength retension of it is 50% or more.

This PVA yarn can be made a tire cord having a cord tensile strength of at least 8.0 g/d, preferably at least 8.5 g/d, and a good GY fatigue life. As this tire cord shows also an excellent index of hot water resistance of at least 50, it increases extremely a reinforcing effect of a tire comparing to a conventional PVA yarn. Also, a high tensile strength decreases fiber consumption and number of ply for tire, it is possible to decrease the tire weight and fuel consumption.

The above mentioned tire cord is produced by a twisting process, in which a plurality of PVA yarns are twisted individually to a first twist, and then all of the first twisted PVA yarns are combined and twisted to a second twist into a tire cord. In the above twisting process, a twist factor [ = (number of twist/10 cm) X (yarn denier X number of ply)$^{1/2}$] is set in the range of 500 to 2500, more preferably in the range of 900 to 2100. Generally, the twist factor of the tire cord has a some relation with the mechanical properties and the fatigue life. When the twist factor increases, the fatigue life becomes better, but on the other hand, the mechanical properties such as a strength and modulus become worse. Although the required properties of the tire cord differ depending on a portion used in the tire; generally, if the twist factor is less than 500, the fatigue life falls extremely and on the other hand if it is more than 2500, an effect to prevent a tire from deformation under loading increases because of the high medium elongation of the cord.

The cord twisted to the above twist factor is applied to a dipping process where it is treated by known adhesive agent such as resolcin-formarin-latex (abbreviated as RFL hereinafter) and epoxy resin, and then introduced to drying and heat-setting process. In preferable drying and heat-setting processes, a dipping treated tire cord is dried in a dry zone under conditions of a temperature of 100 to 160° C, preferably 110 to 150° C; a setting time of 60 to 240 sec, preferably 90 to 180 sec; and a stretch ratio of 0 to 3%, preferably 0 to 2%, then heat-treated in a hot zone under conditions of a temperature of 160 to 240° C, preferably 170 to 220° C; a setting time of 20 to 60 sec, preferably 30 to 50 sec; and a stretch ratio of 0 to 4%, preferably 1 to 3%, and finally further heat-treated in a normalization zone under conditions of a temperature of 160 to 240° C, preferably 170 to 220° C; a setting time of 20 to 60 sec, preferably 30 to 50 sec; and a stretch ratio of -3 to 1%, preferably -2 to 0%.

The resultant tire cord has a cord tensile strength of at least 8.0 g/d, preferably at least 8.5 g/d, and an excellent fatigue life. Unfortunately, we could not find the mechanism of the improvement of the fatigue life. However, it is supposed that the acrylic acid polymeric compound or cross-linking agent makes the crosslinked structures mainly in the amorphous part of the PVA yarn by means of reaction of heating or acid, and it forms lateral directional bonding to the molecular chain axis of polyvinyl alcohol. In this reaction, a property of anti-compression improves and at the same time, fibrillation of the yarn is hard to occur by an external force.

The invention is now described in more detail with reference to the following examples. The measuring methods of the yarn and tire cord properties employed in the examples are measured according to the following description.

⟨Properties of the yarn⟩

(1) Tensile strength and elongation

These properties are measured according to the method in JIS L-1017. At first, PVA yarn has been conditioned for 24 hours at 20° C and 65% RH in the hank form. Then a 25 cm long specimen, which is twisted 10 turns/10 cm, is pulled at a rate of 30 cm/min on the "Tensilon" tester Model DTM-4L made by Toyo Baldwin Co. Ltd. As for chack of the tester, air jaw for the cord is used.

(2) An index of hot water resistance

One end of the specimen is fixed, and for the other end, the load of 0.15 to 0.20 g/d is added. Then applies the hot steam of 120° C for 10 minutes to the center of the specimen. Then the specimen has been conditioned without tension for 48 hours at 20° C and 65% RH. Then the tensile strength of this specimen (T1) is measured. On the other hand, the tensile strength of raw yarn (T0; without steaming) is also measured. An index of hot water resistance is defined as the following equation.

$$\text{An index of hot water resistance } = \frac{T1}{T0} \times 100$$

(3) Content of acrylic acid polymeric compound in the fiber

The content is measured by calculating the area ratio of the methylene groups and carbonyl groups by means of $^{13}$C-NMR in $d^6$-DMSO and FT-IR spectrum.

(4) A peak temperature difference in melting point $\Delta$Tm

The peak temperature difference in melting point $\Delta$Tm is measured by a DSC method as follows.
Apparatus: Model DSC-2C made by Perkin-Elmer Co. Ltd.
Conditions: sample weight; 1 mg
rate of heating; 10° C/min.
cell; standard vessel of alminium
atmosphere; in the nitrogen stream (30 ml/min)
$\Delta$tm is the temperature difference between melting point peaks of the following two kinds of specimens, as defined in J. Polym. Sci., Polym. Phys. Ed., 15, 1507 (1977).
   Type A: The specimen is inserted into the cell without tension.
   Type B: The specimen is wound on the alminium plate to avoid heat shrinkage and inserted into the cell.

$$\Delta\text{Tm } = \text{ (the peak temperature of Type A) - (the peak temperature of Type B)}$$

(5) Small angle X-ray scattering

The small angle X-ray scattering is measured under the following conditions according to the known method that employs a Kiessig camera.
Apparatus: X-ray generator, Model RU-200, made by Rigaku Denki KK.
CuK$\alpha$ line (with Ni filter)
Output: 50 kV - 150 mA
0.3 mm colimator: transmission method
Camera radius: about 400 mm
Exposure: 90 minutes
Film: Kodak no-screen type

⟨Properties of the cord⟩

(1) Tensile strength of the cord

The cord tensile strength is measured same as for the yarn as above mentioned.

(2) Medium elongation

The medium elongation is measured by reading the data of the load-elongation curve at following constant load. In case that the yarn denier is 1500, a constant load is 6.75 kg for 2-ply doubling yarn. And in case that the yarn denier and a number of ply is different, the following correction is done.
1000 denier x 2-ply ; medium elongation is read at 4.5 kg.
1000 denier x 3-ply ; medium elongation is read at 6.75 kg.
1800 denier x 2-ply ; medium elongation is read at 8.1 kg.

(3) GY fatigue life

The GY fatigue life is measured according to the method provided in JIS L-1017, 1321 (A method). In this case, the angle of the tube was lifted from 10° to 90° at the rate of 10°/30 min. And the life at 90° is measured as the GY fatigue life.

Examples 1 to 6:

Six kinds of polymer solution were made according to the following manner. A polyvinyl alcohol having a degree of polymerization of 3500 (saponification value of 99.9 mol%) was mixed with a 25 wt% aqueous solution of acrylic acid oligomer having a degree of polymerization of 400, at mixture ratios of 99.7/0.3 (Example 1), 98/2 (Example 2), 95/5 (Example 3), 90/10 (Example 4), 80/20 (Example 5) and 70/30 (Example 6) in each wt%, respectively and each of the above six kinds of mixed polymer was dissolved in DMSO to give a 15 wt% polymer solution.
Each of these polymer solution was extruded by a dry-jet wet spinning in which were employed a spinneret having 600 holes, each 0.08 mm in diameter and a coagulating bath of methanol containing 5 to 10 wt% DMSO. The distance between the face of the spinneret and the liquid level was 10 mm. The resulting spun yarns were washed with methanol to remove DMSO therefrom, then applied to a first step drawing of 4.0 times at a room temperature, and dried to remove methanol.
Then, they were further drawn 5.3 times at 245° C in the air and six kinds of PVA yarns, each having a nominal denier of 1500, a number of filaments of 600 were obtained. In each yarn, a long-period pattern due to small-angle X-ray scattering was not observed.
TABLE 1 shows mechanical properties and an index of hot water resistance of these yarns. In each of six yarns, crosslinked structures between hydroxyl groups of PVA polymer and carboxy groups of acrylic acid polymers was observed. $\Delta Tm$ of each yarn was also shown in TABLE 1.
Then, six kinds of raw cords having a first twist of 39 turns/10 cm, 2-ply second twist of 39 turns/10 cm were made from the above six kinds of the PVA yarns. These raw cords were treated by adding RFL type adhesive agent in "Computreater" made by Litzler Co. Ltd., and then dried and heat-set under a tension to obtain treated cords. The drying was done at 150° C for 120 seconds under a constant length. And the heat-setting was done at 200° C for 30 seconds under stretching of 3.5% as for heat-setting and at 200° C for 30 seconds under relaxation of 0.5% as for normalization.

The characteristics of the resulting cords were shown in TABLE 3.

Examples 7 to 9:

Three kinds of PVA yarns having a degree of polymerization of 3500 (saponification value of 99.9 mol%), nominal denier of 1500 and number of filaments of 600 were made same as Example 1, except mixing with an aqueous solution of a polymethacrylic acid having a degree of polymerization of 300 so to make mixtures having ratios of 99.7/0.3 (Example 7), 98/2 (Example 8) and 80/20 (Example 9) each in wt%, respectively. In this case also, in each yarn, a long-period pattern due to small-angle X-ray scattering was not observed. And using these yarns, treated cords were made according to the same procedure as Example 1.

Mechanical properties and an index of hot water resistance are shown in TABLE 2. And in each of three yarns, crosslinked structures between hydroxyl groups of PVA polymer and carboxyl groups of methacrylic acid polymer was observed. $\Delta$Tm of each yarn is shown in TABLE 2. Characteristics of the treated cords are shown in TABLE 3.

Example 10:

A PVA yarn having a degree of polymerization of 3500 (saponification value of 99.9 mol%), nominal denier of 1500 and number of filaments of 600 were made same as Example 1, except mixing with poly-acrylic acid having a degree of polymerization of 50000 to make a mixture having a ratio of 98/2 in wt%. In this case also, a long-period pattern due to small-angle X-ray scattering was not observed. And using this yarn, a treated cord was made.

Mechanical properties and an index of hot water resistance are shown in TABLE 1. Crosslinked structures between hydroxyl groups of PVA polymer and carboxyl groups of acrylic acid polymeric compound was also observed. And $\Delta$Tm of the yarn is shown in TABLE 1. Characteristics of the treated cord are shown in TABLE 3.

Example 11:

A polyvinyl alcohol having a degree of polymerization of 3500 (saponification value of 99.9 mol%) was mixed with a 25% aqueous solution of acrylic acid oligomer having a degree of polymerization of 400 at a ratio of 98/2 in wt%, and the polymer mixture was dissolved in hot water including boric acid 2 wt% to give a 12 wt% polymer solution. This polymer solution was extruded by a dry-jet wet spinning in which employed a spinneret having 600 holes, each 0.1 mm in diameter and a coagulating bath of aqueous solution containing caustic soda of 100 g/l and sulfuric acid of 100 g/l, the distance between the face of the spinneret and the liquid level of the coagulating bath being 10 mm. The resultant yarn was successively applied to a first step drawing of 4.0 times and then to a neutlization and washing step. Thereafter, the drawn yarn was removed the water adhered to the yarn surface in a bath of methanol and further dried. The drawn yarn was further applied to a second step drawing of 5.0 times at 245° C in the air and oiled to become a multi-filament yarn of a nominal denier of 1500 and a number of filaments of 600. In the multi-filament yarn, a long-period pattern due to small-angle X-ray scattering was not obserbed. Using this yarn, a treated cord was made by the same procedure as Example 1.

Mechanical properties and an index of hot water resistance of this yarn are shown in TABLE 1. Crosslinked structures between the hydroxyl groups of PVA polymer and the carboxyl groups of acrylic acid oligomer was observed. And $\Delta$Tm of the yarn is shown in TABLE 1. Properties of the treated cord are shown in TABLE 3.

Example 12:

A polyvinyl alcohol having a degree of polymerization of 3800 (saponification value of 99.9 mol%) was dissolved in DMSO to give a 17 wt% polymer solution. This polymer solution was extruded by a dry-jet wet spinning in which employed a spinneret having 600 holes, each 0.08 mm in diameter and a coagulating bath of methanol containing 5 to 10 wt% DMSO, the distance between the face of the spinneret and the liquid level of the coagulating bath being 5 mm. The resulting yarn was applied to a first step drawing of 4.0 times at room temperature after washed with methanol to remove DMSO, and then dried to remove methanol.

Then, the first step drawn yarn was introduced into a treatment solution which contains cross-linking agent. As for the cross-linking agent, a methanol solution containing 6% of clemperhydroxide was used. The treated yarn was further drawn 5.2 times at 245° C in the air, and thus PVA yarn having a nominal denier of 1500, a number of filaments of 600 and no long-period pattern due to small-angle X-ray scattering was obtained.

Mechanical properties and an index of hot water resistance are shown in TABLE 4. In this yarn, crosslinked structures was observed in the hydroxyl groups of the PVA polymer. And ΔTm of the yarn is shown in TABLE 1.

Comparative example 1:

A PVA yarn having a nominal denier of 1500 and a number of filaments of 600 was made by the same procedure as Example 9, except adding of acrylic acid polymeric compound.

Mechanical properties, an index of hot water resistance and ΔTm are shown in TABLE 1.

Comparative example 2:

A PVA yarn having a nominal denier of 1500 and a number of filaments of 600 was made by the same procedure as Example 12, except that the treatment by the cross-linking agent has not been done.

This yarn has not crosslinked structures in the hydroxyl groups of the PVA polymer. Mechanical properties, an index of hot water resistance and ΔTm are shown in TABLE 4.

Comparative example 3:

Characteristics of "Vinylon" yarn (Type 1800-1000-T5501, made by Kuraray Co. Ltd.) was measured for the reference. Crosslinked structures was observed in the hydroxyl groups of the PVA polymer. Mechanical properties, an index of hot water resistance and ΔTm are shown in TABLE 1. Especially, an index of hot water resistance was 0 (zero). That is, exposing in the steam at 120° C, "Vinylon" has melted down only in 8 minutes.

TABLE 1

| Level | ΔTm (°C) | Denier (D) | Tensile strength (g/d) | Elongation (%) | An index of hot water resistance (-) |
|---|---|---|---|---|---|
| Example 1 | 23.2 | 1505 | 17.0 | 5.0 | 86 |
| 2 | 27.3 | 1519 | 17.1 | 5.1 | 88 |
| 3 | 28.1 | 1560 | 16.6 | 5.1 | 88 |
| 4 | 26.8 | 1620 | 16.2 | 5.1 | 75 |
| 5 | 27.2 | 1498 | 14.2 | 5.1 | 78 |
| 6 | 27.7 | 1523 | 12.5 | 5.5 | 70 |
| 10 | 22.1 | 1476 | 16.0 | 5.2 | 85 |
| 11 | 21.5 | 1502 | 16.2 | 5.1 | 65 |
| Comparative 1 Example | 18.7 | 1497 | 17.0 | 5.1 | 20 |
| 3 | 13.5 | 1769 | 10.8 | 6.7 | 0 (melt down) |

TABLE 2

| Level | ΔTm (°C) | Denier (D) | Tensile strength (g/d) | Elongation (%) | An index of hot water resistance (-) |
|---|---|---|---|---|---|
| Example 7 | 24.4 | 1514 | 17.2 | 5.2 | 78 |
| 8 | 26.7 | 1497 | 17.1 | 5.1 | 86 |
| 9 | 27.1 | 1512 | 14.5 | 5.1 | 82 |

TABLE 3

| Level | Twist factor | Tensile strength (g/d) | Medium elongation (%) | GY Fatigue life (min) |
|---|---|---|---|---|
| Example 1 | 2140 | 9.4 | 2.0 | 1540 |
| 2 | 2140 | 9.3 | 1.9 | 1680 |
| 3 | 2140 | 9.1 | 1.9 | 2200 |
| 4 | 2140 | 9.2 | 1.9 | 2040 |
| 5 | 2140 | 8.4 | 2.2 | 1280 |
| 6 | 2140 | 8.1 | 2.3 | 1120 |
| 7 | 2140 | 9.6 | 1.9 | 1400 |
| 8 | 2140 | 9.2 | 1.9 | 1700 |
| 9 | 2140 | 8.5 | 2.1 | 1260 |
| 10 | 2140 | 8.9 | 2.0 | 1800 |
| 11 | 2140 | 8.9 | 1.9 | 1250 |
| Comparative Example 1 | 2140 | 9.7 | 2.1 | 740 |

TABLE 4

| Level | $\Delta$Tm (°C) | Denier (D) | Tensile strength (g/d) | Elongation (%) | An index of hot water resistance (-) |
|---|---|---|---|---|---|
| Example 12 | 20.2 | 1538 | 17.4 | 5.2 | 80 |
| Comparative Example 2 | 18.5 | 1530 | 17.3 | 5.1 | 25 |

**Claims**

1. A multifilament yarn of polyvinyl alcohol having a degree of polymerisation of at least 1500, a tensile strength of at least 10 g/d, which is obtainable from polyvinyl alcohol having a cross-linked structure in the hydroxyl groups thereof, characterised in that the yarn has an index of hot water resistance of at least 50, and a peak temperature difference in melting point $\Delta$Tm of at least 20° C.

2. A multifilament yarn of polyvinyl alcohol as claimed in claim 1, wherein the polyvinyl alcohol has a saponification value of at least 99 mol %.

3. A multifilament yarn of polyvinyl alcohol as claimed in claim 1, wherein polyvinyl alcohol is blended with acrylic acid polymeric compound in a mixture ratio of acrylic acid polymeric compound to polyvinyl alcohol of from 0.1 to 40% by weight.

4. A multifilament yarn of polyvinyl alcohol as claimed in claim 3, wherein a degree of polymerisation of the acrylic acid polymeric compound is in the range of 200 to 100,000.

5. A multifilament yarn of polyvinyl alcohol as claimed in claim 3, wherein acrylic acid polymeric compound is selected from the group of polymer and oligomer of acrylic acid, methacrylic acid, ethacrylic acid and alkaline metal salts thereof; and co-polymer and co-oligomer which is co-polymerised olefinic monomer in the main chain of said polymer and oligomer.

6. A tire cord comprising multifilament yarn of polyvinyl alcohol as claimed in claim 1, wherein a plurality of the multifilament yarns are twisted individually to a first twist and further in combination to a second twist to be a cord and a tensile strength of the cord is at least 8.0 g/d.

7. A tire cord as claimed in claim 6, wherein the twist factor [ = (number of twists/10cm x (yarn denier x number of ply)$^{\frac{1}{2}}$] is in the range of 500 to 2500.

9

EP 0 351 046 B1

**8.** A process for producing a polyvinyl alcohol multifilament yarn which comprises the steps of spinning a solution of polyvinyl alcohol having a degree of polymerisation of at least 1500 and drawing the resultant spun filament yarn at a total draw ratio of at least 12 times by a multi-step drawing process, characterised in that the polyvinyl alcohol is blended with an acrylic acid polymeric compound in a mixture ratio of acrylic acid polymer compound to polyvinyl alcohol of from 0.1 to 40% by weight, the solution having a pH of from 5 to 11, by a spinning process selected from a wet spinning, a dry-jet wet spinning and a gel spinning.

**9.** A process for producing a polyvinyl alcohol multifilament yarn as claimed in claim 8, wherein a draw ratio of the first step is in the range of 2 to 10 times.

**10.** A process for producing a polyvinyl alcohol multifilament yarn as claimed in claim 8, wherein a degree of polymerisation of acrylic acid polymeric compound is in the range of 200 to 100,000.

**11.** A process for producing a polyvinyl alcohol multifilament yarn as claimed in claim 8, wherein acrylic acid polymeric compound is selected from the group of polymer and oligomer of acrylic acid, methacrylic acid, ethacrylic acid and alkaline metal salts thereof; and co-polymer and co-oligomer which is co-polymerised olefinic monomer in the main chain of said polymer and oligomer.

**12.** A process for producing a polyvinyl alcohol multifilament yarn, which comprises the steps of spinning a solution of polyvinyl alcohol having a degree of polymerisation of at least 1500 by a spinning process and drawing the resultant spun filament yarn at a total draw ratio of at least 12 times in a multi-step drawing process, characterised in that the spinning process is selected from a wet spinning, a dry-jet wet spinning and a gel spinning, and the intermediate drawn filament yarn is treated with cross-linking agent selected from the group of hydroperoxide, di-alkylperoxide, peroxyketal, peroxyester, isocyanate compound, blocked isocyanate compound, urethane compound and epoxy compound, or mixtures thereof, during said multi-step drawing process, and the spun filament yarn is drawn at least 3.0 times prior to being treated with the cross-linking agent.

## Patentansprüche

**1.** Multifilamentgarn von Polyvinylalkohol mit einem Polymerisationsgrad von wenigstens 1500, mit einer Zugfestigkeit von wenigstens 10 g/d, welches aus Polyvinylalkohol mit einer vernetzten Struktur in seinen Hydroxylgruppen erhältlich ist, **dadurch gekennzeichnet**, daß das Garn einen Heißwasserbeständigkeitsindex von wenigstens 50 und einen Spitzentemperaturunterschied im Schmelzpunkt $\Delta$Tm von wenigstens 20 °C hat.

**2.** Multifilamentgarn von Polyvinylalkohol nach Anspruch 1, worin der Polyvinylalkohol einen Verseifungswert von wenigstens 99 mol-% hat.

**3.** Multifilamentgarn von Polyvinylalkohol nach Anspruch 1, worin Polyvinylalkohol mit Acrylsäurepolymerverbindung in einem Mischungsverhältnis von Acrylsäurepolymerverbindung zu Polyvinylalkohol von 0,1 bis 40 Gew.-% vermischt ist.

**4.** Multifilamentgarn vom Polyvinylalkohol nach Anspruch 3, worin der Polymerisationsgrad der Acrylsäurepolymerverbindung im Bereich von 200 bis 100 000 liegt.

**5.** Multifilamentgarn von Polyvinylalkohol nach Anspruch 3, worin die Acrylsäurepolymerverbindung aus der Gruppe der Polymeren und Oligomeren von Acrylsäure, Methacrylsäure, Ethacrylsäure und der Alkalimetallsalze hiervon sowie der Copolymeren und Cooligomeren, die mit olefinischen Monomeren in der Hauptkette des Polymers und Oligomers copolymerisiert sind, ausgewählt ist.

**6.** Reifenkord umfassend ein Multifilamentgarn von Polyvinylalkohol nach Anspruch 1, worin mehrere Multifilamentgarne einzeln zu einem ersten Drall und weiterhin in Kombination miteinander zu einem zweiten Drall zu einem Kord gezwirnt sind und die Zugfestigkeit des Kordes wenigstens 8,0 kg/d beträgt.

10

7.  Reifenkord nach Anspruch 6, worin der Zwirnfaktor [= (Drallzahl/10 cm) x (Garndenier x Lagenzahl)$^{\frac{1}{2}}$] im Bereich von 500 bis 2500 liegt.

8.  Verfahren zur Herstellung eines Polyvinylalkohol-Multifilamentgarnes mit den Stufen, in denen man eine Lösung von Polyvinylalkohol mit einem Polymerisationsgrad von wenigstens 1500 spinnt und das resultierende gesponnene Filamentgarn mit einem Gesamtstreckverhältnis von wenigstens 12fach mit einem mehrstufigen Reckverfahren reckt, **dadurch gekennzeichnet**, daß man den Polyvinylalkohol mit einer Acrylsäurepolymerverbindung in einem Mischungverhältnis von Acrylsäurepolymerverbindung zu Polyvinylalkohhol von 0,1 bis 40 Gew.-%, wobei die Lösung einem pH-Wert von 5 bis 11 hat, durch ein Spinnverfahren vermengt, das unter Naßspinnverfahren, Trockenstrahlnaßspinnverfahren und Gelspinnverfahren ausgewählt ist.

9.  Verfahren zur Herstellung eines Polyvinylalkohol-Multifilamentgarnes nach Anspruch 8, bei dem das Reckverhältnis der ersten Stufe im Bereich von 2- bis 10fach liegt.

10. Verfahren zur Herstellung eines Polyvinylalkohol-Multifilamentgarnes nach Anspruch 8, bei dem der Polymerisationsgrad der Acrylsäurepolymerverbindung im Bereich von 200 bis 100 000 liegt.

11. Verfahren zur Herstellung eines Polyinvalkohol-Multifilamentgarnes nach Anspruch 8, bei dem die Acrylsäurepolymerverbindung aus der Gruppe der Polymeren und Oligomeren von Acrylsäure, Methacrylsäure, Ethacrylsäure und der Alkalimetallsalze hiervon sowie Copolymeren und Cooligomeren, die mit olefinischem Monomer in der Hauptkette des Polymers und Oligomers copolymerisiert sind, ausgewählt wird.

12. Verfahren zur Herstellung eines Polyvinylalkohol-Multifilamentgarnes mit den Stufen, in denen man eine Lösung von Polyvinylalkohol mit einen Polymerisationsgrad von wenigstens 1500 mit einem Spinnverfahren spinnt und das resultierende gesponnene Filamentgarn mit einem Gesamtstreckverhältnis von wenigstens 12fach in einem mehrstufigen Reckverfahren reckt, **dadurch gekennzeichnet**, daß das Spinnverfahren unter Naßspinnverfahren, Trockenstrahlnaßspinnverfahren und Gelspinnverfahren ausgewählt wird und das zwischengereckte Filamentgarn mit Vernetzungsmittel, das aus der Gruppe Hydroperoxid, Dialkylperoxid, Peroxyketal, Peroxyester, Isocyanatverbindung, blockierte Isocyanatverbindung, Urethanverbindung und Epoxyverbindung oder Gemischen hiervon ausgewählt ist, während des mehrstufigen Reckverfahrens behandelt wird und das gesponnene Filamentgarn vor der Behandlung mit dem Vernetzungsmittel wenigstens 3,0fach gereckt wird.

## Revendications

1.  Fil multifilament d'alcool polyvinylique ayant un degré de polymérisation d'au moins 1500, une résistance à la traction d'au moins 10 g/d, que l'on peut obtenir à partir d'un alcool polyvinylique ayant une structure réticulée dans ses groupes hydroxyle, caractérisé en ce que le fil a un indice de résistance à l'eau chaude d'au moins 50, et une différence de pic de température dans le point de fusion $\Delta$Tm d'au moins 20°C.

2.  Fil multifilament d'alcool polyvinylique selon la revendication 1, dans lequel l'alcool polyvinylique a une valeur de saponification d'au moins 99% molaire.

3.  Fil multifilament d'alcool polyvinylique selon la revendication 1, dans lequel l'alcool polyvinylique est mélangé à un composé polymérique d'acide acrylique dans un rapport de mélange du composé polymérique d'acide acrylique à l'alcool polyvinylique compris entre 0,1 et 40% en poids.

4.  Fil multifilament d'alcool polyvinylique selon la revendication 3, dans lequel le degré de polymérisation du composé polymérique d'acide acrylique est dans un intervalle de 200 à 100 000.

5.  Fil multifilament d'alcool polyvinylique selon la revendication 3, dans lequel le composé polymérique d'acide acrylique est choisi dans le groupe constitué par un polymère et oligomère d'acide acrylique, d'acide méthacrylique, d'acide éthacrylique et de leurs sels de métaux alcalins; et un copolymère et co-oligomère qui est un monomère oléfinique copolymérisé dans la chaîne principale dudit polymère et oligomère.

6. Nappe de pneu comprenant un fil multifilament d'alcool polyvinylique selon la revendication 1, dans laquelle plusieurs des fils multifilaments sont tordus individuellement en une première torsion et en outre en combinaison en une seconde torsion pour former une nappe, et où la résistance de la nappe à la traction est d'au moins 8,0 g/d.

7. Nappe de pneu selon la revendication 6, dans laquelle le facteur de torsion [ = nombre de torsions/10 cm x (denier de fil x nombre de brins)$^{1/2}$] est dans un intervalle de 500 à 2500.

8. Procédé de production d'un fil multifilament d'alcool polyvinylique qui comprend les étapes de filage d'une solution d'alcool polyvinylique ayant un degré de polymérisation d'au moins 1500 et d'étirement du fil filamentaire filé résultant selon un rapport d'étirement total d'au moins 12 fois par un procédé d'étirement à plusieurs étapes, caractérisé en ce qu'on mélange l'alcool polyvinylique avec un composé polymérique d'acide acrylique dans un rapport de mélange du composé polymère d'acide acrylique à l'alcool polyvinylique de 0,1 à 40% en poids, la solution ayant un pH compris entre 5 et 11, par un procédé de filage choisi parmi le filage au mouillé, le filage au mouillé à jet sec et le filage de gel.

9. Procédé de production d'un fil multifilament d'alcool polyvinylique selon la revendication 8, dans lequel le rapport d'étirement de la première étape est dans un intervalle de 2 à 10 fois.

10. Procédé de production d'un fil multifilament d'alcool polyvinylique selon la revendication 8, dans lequel le degré de polymérisation du composé polymérique d'acide acrylique est dans un intervalle de 200 à 100 000.

11. Procédé de production d'un fil multifilament d'alcool polyvinylique selon la revendication 8, dans lequel le composé polymérique d'acide acrylique est choisi dans le groupe constitué par un polymère et oligomère d'acide acrylique, d'acide méthacrylique, d'acide éthacrylique, et de leurs sels de métaux alcalins; et un copolymère et co-oligomère qui est un monomère oléfinique copolymérisé dans la chaîne principale dudit polymère et oligomère.

12. Procédé de production d'un fil multifilament d'alcool polyvinylique qui comprend les étapes de filage d'une solution dd'alcool polyvinylique ayant un degré de polymérisation d'au moins 1500 par un procédé de filage et d'étirement du fil filamentaire filé résultant selon un rapport d'étirement total d'au moins 12 fois dans un procédé d'étirement à plusieurs étapes, caractérisé en ce que le procédé de filage est choisi parmi un filage au mouillé, un filage au mouillé à jet sec et un filage de gel, et le fil filamentaire étiré intermédiaire est traité avec un agent réticulant choisi dans le groupe constitué par un hydroperoxyde, un peroxyde de dialkyle, un peroxycétal, un peroxyester, un composé d'isocyanate, un composé d'isocyanate séquencé, un composé d'uréthane et un composé époxyde, ou leurs mélanges, au cours dudit procédé d'étirement multi-étapes, et le fil filamentaire filé est étiré au moins 3,0 fois avant d'être traité avec l'agent réticulant.